# EUROPÄISCHE PATENTSCHRIFT

(11) **EP 3 207 664 B1**
(45) Veröffentlichungstag und Bekanntmachung des Hinweises auf die Patenterteilung: **29.07.2020**
(21) Anmeldenummer: 15774566.2
(22) Anmeldetag: 28.09.2015
(51) Int. Cl.: H04L 12/12, H04L 12/40

(54) **NUTZUNG EINER BUS-LEITUNG ZUR ÜBERTRAGUNG ALTERNATIVER SIGNALCODIERUNGEN**
USE OF A BUS LINE TO TRANSMIT ALTERNATIVE SIGNAL CODING
UTILISATION D'UNE LIGNE DE BUS POUR LA TRANSMISSION DE CODES DE SIGNAUX ALTERNATIFS

(30) Priorität: 13.10.2014 DE 102014220646
(43) Veröffentlichungstag der Anmeldung: 23.08.2017
(73) Patentinhaber: Bayerische Motoren Werke Aktiengesellschaft, 80809 München (DE)
(72) Erfinder: GASSER, Bernhard, 81476 München (DE); KALTENBRUNNER, Martin, 84416 Taufkirchen / Vils (DE); WINKLHOFER, Peter, 80995 Muenchen (DE)
(86) Internationale Anmeldenummer: PCT/EP2015/072245
(87) Internationale Veröffentlichungsnummer: WO 2016/058815

(56) Entgegenhaltungen:
- WO-A2-2005/024749
- DE-A1-102013 203 731
- US-A1- 2010 121 534

## Beschreibung

Die Erfindung betrifft eine Vorrichtung zur Kopplung eines Fahrzeugmoduls, insbesondere eines Fahrzeugsensors, mit einem Steuergerät. Die Erfindung betrifft insbesondere ein Fahrzeugmodul mit einer Schnittstelle für eine Datenleitung zur Übertragung der Sensordaten an ein Steuergerät des Fahrzeugs.

Fahrzeugmodule, z.B. Fahrzeugsensoren, eines Fahrzeugs können über Ein-Draht-Datenübertragungssysteme, z.B. über einen LIN (Local Interconnect Network) Bus mit einem Steuergerät, z.B. mit einem zentralen Steuergerät bzw. ECU (Electronic Control Unit), des Fahrzeugs verbunden werden. Durch eine "fehler-schaltbare Energieversorgungsleitung" bzw. Fehlerleitung, welche sich in einem Normalfall, z.B. in einem Betriebsmodus des Fahrzeugmoduls, auf einem hohen Potentialniveau befindet, können im Fehlerfall, insbesondere bei Störung der Energieversorgung, einzelne Fahrzeugmodule deaktiviert werden. Die "fehler-schaltbare Energieversorgungsleitung" (Fehlerleitung) kann z.B. zur Energieversorgung der Fahrzeugmodule verwendet werden. Bei der Deaktivierung der Fahrzeugmodule können insbesondere Fahrzeugsensoren vom Gesamtsystem getrennt werden, so dass es nicht mehr möglich ist, diese Fahrzeugsensoren anzusteuern, anzusprechen und/oder auszulesen.

Die Deaktivierung der "fehler-schaltbaren Energieversorgungsleitung" führt typischerweise zu einer Reduzierung des Fahrzeugmodulstroms. Die "fehler-schaltbare Energieversorgungsleitung" (bzw. Fehlerleitung) kann somit dazu verwendet werden, Fahrzeugmodule zu deaktivieren, um einen Energieverbrauch des Fahrzeugs zu reduzieren.

Aus der US 2010/121534 A1 ist ein Fahrzeug mit einer elektronischen Steuereinheit sowie mehreren Sensoren bekannt, die Sensordaten erfassen. Die erfassten Daten werden über eine Schnittstelle an das Steuergerät übertragen.

Aus der WO 2005/024749 A2 ist ebenfalls ein Fahrzeug mit einer elektronischen Steuereinheit bekannt. Die Steuereinheit ist über einen Schnittstellenbaustein und eine zweidrahtige Leitung mit mehreren, seriell geschalteten Sensoren verbunden, über die Daten der Sensoren an das Steuergerät übertragbar sind.

Das vorliegende Dokument befasst sich mit der technischen Aufgabe, ein Fahrzeugmodul bereitzustellen, welches auch in einem Energiesparmodus und/oder in einem Fehlerfall, d.h. insbesondere bei einer unterbrochenen Energieversorgung, in effizienter Weise ein oder mehrere grundlegende Basisfunktionen bereitstellen kann.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein Fahrzeugmodul für ein Fahrzeug (insbesondere für ein Straßenfahrzeug) beschrieben. Das Fahrzeugmodul umfasst ein oder mehrere Sensoren, die eingerichtet sind, in einem Betriebsmodus des Fahrzeugmoduls Sensordaten zu erfassen, und die eingerichtet sind, in einem Energiesparmodus des Fahrzeugmoduls eine Vielzahl von diskreten Zuständen anzunehmen, um in dem Energiesparmodus des Fahrzeugmoduls eine Basisfunktion des Fahrzeugmoduls bereitzustellen.

Die ein oder mehreren Sensoren können einen ersten Sensor umfassen, der eingerichtet ist, im Betriebsmodus des Fahrzeugmoduls Sensordaten zu erfassen. Der erste Sensor kann z.B. einen Sensor an einem Türgriff des Fahrzeugs, an einer Tür des Fahrzeugs, an einer Heckklappe des Fahrzeugs und/oder an einer Tankklappe des Fahrzeugs umfassen. Beispielsweise kann der erste Sensor einen Näherungssensor umfassen, der eingerichtet ist, eine Annäherung einer Hand eines Nutzers des Fahrzeugs zu detektieren.

Die ein oder mehreren Sensoren können weiter einen Basissensor umfassen, der eingerichtet ist, die Vielzahl von diskreten Zuständen anzunehmen, um im Energiesparmodus des Fahrzeugmoduls die Basisfunktion des Fahrzeugmoduls bereitzustellen. Insbesondere kann der Basissensor eingerichtet sein, in einem eingeschränkten Umfang Daten für eine Fahrzeugfunktion bereitzustellen, wenn keine Sensordaten mittels des ersten Sensors für die Fahrzeugfunktion bereitgestellt werden können (weil das Fahrzeugmodul im Energiesparmodus ist). Beispielsweise kann der Basissensor Informationen darüber bereitstellen, ob ein (ggf. mechanischer oder elektronischer) Basis-Schalter betätigt wurde oder nicht (z.B. durch eine Hand eines Nutzers des Fahrzeugs). Somit kann mit dem Basissensor zwar keine Annäherung (z.B. eine Annäherung an einen Türgriff) detektiert werden, aber zumindest eine konkrete Betätigung (z.B. ein Greifen des Türgriffs).

Die ein oder mehreren Sensoren können eine Vielzahl von Sensoren umfassen. Beispielsweise kann an einer Tür des Fahrzeugs ein Sensor auf der Hinterseite des Türgriffs, ein Sensor auf der Vorderseite des Türgriffs und ein Näherungssensor angeordnet sein. In dem Betriebsmodus können alle Sensoren der Vielzahl von Sensoren aktiv sein und Sensordaten erfassen. So kann eine Funktion mit einem hohen Komfort bereitgestellt werden. Andererseits kann in dem Energiesparmodus nur eine Teilmenge der Vielzahl von Sensoren aktiv sein, um die Basisfunktion bereitzustellen. Beispielsweise kann in dem Energiesparmodus nur der Sensor auf der Hinterseite des Türgriffs aktiv sein. Desweiteren können in dem Energiesparmodus anstelle der (ggf. kodierten) Sensordaten diskrete Zustände (wie z.B. Sensor wird berührt bzw. Sensor wird nicht berührt) generiert werden.

Mit anderen Worten, die Vielzahl von Sensoren kann den o.g. ersten Sensor und den Basissensor umfassen. Dabei kann der Basissensor ggf. auch im Betriebsmodus aktiv sein, um eine vollständige Funktion des Fahrzeugmoduls bereitzustellen. Beispielsweise kann der Basissensor den Sensor auf der Hinterseite des Türgriffs umfassen.

Im Betriebsmodus können die ein oder mehreren Sensoren Sensordaten bereitstellen, die gemäß einem vordefinierten Übertragungsverfahren kodiert sind. Andererseits können die ein oder mehreren Sensoren im Energiesparmodus diskrete Zustandsinformationen (z.B. Schalter auf / Schalter zu) bereitstellen.

Desweiteren umfasst das Fahrzeugmodul eine Schnittstelle für eine Datenleitung zur Übertragung der Sensordaten an ein Steuergerät des Fahrzeugs und/oder zum Empfang von Daten von dem Steuergerät des Fahrzeugs. Beispielsweise können Sensordaten übertragen werden, die anzeigen, ob sich eine Hand eines Nutzers des Fahrzeugs dem ersten Sensor nähert. Die Datenleitung zwischen Fahrzeugmodul und Steuergerät kann eine Ein-Draht Datenleitung, insbesondere einen Local Interconnect Network (LIN) Bus, umfassen.

Das Fahrzeugmodul umfasst außerdem einen Energiesparmodus-Schalter, der eingerichtet ist, in dem Energiesparmodus die ein oder mehrere Sensoren derart mit der Schnittstelle für die Datenleitung zu verbinden, dass Informationen bzgl. eines Zustands der Vielzahl von diskreten Zuständen über die Datenleitung an das Steuergerät übermittelt werden können. Insbesondere kann der Energiesparmodus-Schalter eingerichtet sein, in dem Energiesparmodus den Basissensor mit der Schnittstelle für die Datenleitung zu verbinden, um Informationen bzgl. eines Zustands des Basissensors über die Datenleitung an das Steuergerät zu übermitteln.

Andererseits kann der Energiesparmodus-Schalter ggf. sicherstellen, dass im Betriebsmodus der Basissensor nicht mit der Schnittstelle für die Datenleitung verbunden ist bzw. dass im Betriebsmodus keine diskreten Zustandsinformationen sondern nur (ggf. kodierte) Sensordaten auf die Datenleitung gelegt werden. Der Energiesparmodus-Schalter ermöglicht es somit, im Energiesparmodus (in dem die ein oder mehreren Sensoren (insbesondere der erste Sensor) keine Sensordaten bereitstellen) die verfügbare Datenleitung für die Übertragung von (direkten) Informationen bzgl. eines Zustands aus der Vielzahl von Zuständen (insbesondere bzgl. des Zustands des Basissensors) zu nutzen. Es kann somit die gleiche Datenleitung für die Übertragung der Sensordaten (im Betriebsmodus) und für die Übertragung der diskreten Zustandsinformationen (im Energiesparmodus) verwendet werden. Mit anderen Worten, es können über die gleiche Datenleitung, insbesondere über die gleiche Bus-Leitung, unterschiedlich codierte Signale, d.h. Sensordaten (die z.B. gemäß eines ersten Formats bzw. eines ersten Übertragungsverfahrens codiert sind) und Informationen bzgl. eines Zustands aus der Vielzahl von diskreten Zuständen, übertragen werden. Mit noch anderen Worten, es können mittels des Energiesparmodus-Schalters, insbesondere mittels eines entsprechend ausgebildeten Steuerkreises bzw. Steuergeräts, alternative Signalcodierungen über die gleiche Datenleitung übertragen werden. Somit kann in effizienter Weise (d.h. durch Verwendung der gleichen Datenleitung) auch in einem Fehlerfall und/oder bei einem Betrieb mit reduziertem Energieverbrauch (d.h. im Energiesparmodus) eine Basisfunktion des Fahrzeugmoduls bereitgestellt werden.

Wie bereits oben dargelegt, kann der Basissensor einen (ggf. mechanischen) Basis-Schalter umfassen, der durch einen Nutzer des Fahrzeugs betätigt werden kann. Der Basis-Schalter kann einen offenen Zustand und einen geschlossenen Zustand umfassen. Insbesondere kann die Vielzahl von diskreten Zuständen (ggf. ausschließlich) den offenen Zustand und den geschlossenen Zustand des Basis-Schalters umfassen. Die Informationen bzgl. des offenen Zustands können ein Spannungsniveau der Datenleitung umfassen, welches größer als oder gleich wie ein Spannungs-Schwellenwert ist. Desweiteren können die Informationen bzgl. des geschlossenen Zustands ein Spannungsniveau der Datenleitung umfassen, welches kleiner als der Spannungs-Schwellenwert ist.

Beispielsweise kann die Datenleitung (z.B. durch einen Pull-up Widerstand zu einer Versorgungsspannung) auf einem bestimmten Default-Spannungsniveau gehalten werden. Der Basis-Schalter kann eingerichtet sein, im geschlossenen Zustand die Schnittstelle für die Datenleitung mit einer Masse des Fahrzeugs zu koppeln. Somit kann das Spannungsniveau der Datenleitung im offenen Zustand des Basis-Schalters substantiell dem Default-Spannungsniveau entsprechen. Andererseits kann das Spannungsniveau der Datenleitung im geschlossenen Zustand des Basis-Schalters substantiell dem Spannungsniveau der Masse des Fahrzeugs entsprechen. Somit können durch zwei diskrete Spannungs- oder Potentialniveaus der Datenleitung die möglichen Zustände des Basissensors an das Steuergerät übermittelt werden. Diese unterschiedlichen Spannungsniveaus können durch das Steuergerät detektiert werden.

Der Energiesparmodus-Schalter kann zum Beispiel einen selbstleitenden oder selbstsperrenden Transistor (z.B. einen Metalloxid Halbleiter (MOS) Transistor) umfassen, der einen leitenden Zustand und einen sperrenden Zustand aufweist. Der Transistor ist eingerichtet, bei einem Übergang des Fahrzeugmoduls von dem Betriebsmodus in den Energiesparmodus von dem sperrenden Zustand in den leitenden Zustand überzugehen, und so im Energiesparmodus die Verbindung zwischen Basissensor und Datenleitung herzustellen. Andererseits wird durch den sperrenden Zustand (im Betriebsmodus) sichergestellt, dass die Datenleitung im Betriebsmodus nur mit den Sensordaten des ersten Sensors und nicht mit Informationen bzgl. des Zustands des Basissensors belegt wird.

Das Fahrzeugmodul kann eine Steuereinheit umfassen, die eingerichtet ist, den (selbstleitenden oder selbstsperrenden) Transistor im sperrenden Zustand zu halten, wenn das Fahrzeugmodul im Betriebsmodus ist (z.B. durch Anlegen einer entsprechenden Spannung an einem Gate des Transistors). Andererseits kann der selbstleitende Transistor automatisch in den leitenden Zustand wechseln, wenn sich das Fahrzeugmodul im Energiesparmodus befindet (z.B. wenn die Steuereinheit nicht mehr mit elektrischer Energie versorgt wird). Somit kann eine zuverlässige Kopplung von Basissensor und Datenleitung bei Übergang in den Energiesparmodus gewährleistet werden.

Das Fahrzeugmodul kann eine Schnittstelle für eine Versorgungsleitung umfassen. Die Versorgungsleitung kann auch als Fehlerleitung bzw. als Energiesparmodus-Leitung bezeichnet werden. Das Fahrzeugmodul kann über die Versorgungsleitung mit elektrischer Energie versorgt werden. Die elektrische Energie kann von einer Energieversorgung (z.B. von einer Batterie) des Fahrzeugs bereitgestellt werden. Das Steuergerät kann eingerichtet sein, die Versorgungsleitung zum Fahrzeugmodul zu unterbrechen (z.B. um den Energieverbrauch im Fahrzeug zu senken), und damit das Fahrzeugmodul in den Energiesparmodus zu versetzten. Das Fahrzeugmodul kann in dem Energiesparmodus sein, wenn die Versorgungsspannung an der Schnittstelle für die Versorgungsleitung kleiner als oder gleich wie ein Versorgungs-Schwellenwert ist (z.B. wenn die Versorgungsspannung durch eine Unterbrechung der Versorgungsleitung auf substantiell 0V gesunken ist). Somit kann der Basissensor bei Unterbrechung der Versorgungsspannung des Fahrzeugmoduls für die Bereitstellung einer eingeschränkten Basisfunktion verwendet werden.

Das Fahrzeugmodul kann eingerichtet sein, im Energiesparmodus elektrische Energie für die Versorgung der ein oder mehreren Sensoren (insbesondere für die Versorgung des Basissensors) über die Schnittstelle für die Datenleitung zu beziehen. Dies ermöglicht die Verwendung von elektronischen Basissensoren.

Der Energiesparmodus-Schalter kann eingerichtet sein, automatisch den Basissensor mit der Schnittstelle für die Datenleitung zu verbinden, wenn die Versorgungsspannung an der Schnittstelle für die Versorgungsleitung auf oder unter den Versorgungs-Schwellenwert fällt (z.B. wenn die Versorgungsleitung unterbrochen wird). Dies kann z.B. durch Verwendung einer (selbstleitenden oder selbstsperrenden) Transistorschaltung erreicht werden, die bei Einbruch der Versorgungsspannung automatisch in den leitenden Zustand wechselt. Der Kanal des Transistors kann mit der Schnittstelle für die Datenleitung verbunden sein. Desweiteren kann die Datenleitung durch einen Pull-Up Widerstand auf ein bestimmtes Default-Spannungsniveau gelegt werden, um eine ausreichende Gate-Source Spannung V_{GS} bereitzustellen und um den Transistor in den leitenden Zustand zu versetzen.

Gemäß einem Aspekt wird ein Steuergerät für ein Fahrzeug beschrieben. Das Steuergerät ist eingerichtet, zu ermitteln, ob sich ein in diesem Dokument beschriebenes Fahrzeugmodul in einem Betriebsmodus oder in einem Energiesparmodus befindet. Insbesondere kann das Steuergerät ermitteln, ob eine Versorgungsleitung zu dem Fahrzeugmodul unterbrochen wurde oder nicht, und sich das Fahrzeugmodul daher in dem Energiesparmodus bzw. in dem Betriebsmodus befindet.

Wie oben dargelegt, umfasst das Fahrzeugmodul ein oder mehrere Sensoren, die eingerichtet sind, in dem Betriebsmodus, Sensordaten über eine Datenleitung zu übertragen, und in dem Energiesparmodus, diskrete Zustandsinformationen über die Datenleitung zu übertragen. Die ein oder mehreren Sensoren können einen ersten Sensor und einen Basissensor umfassen. Der erste Sensor ist typischerweise eingerichtet, relativ umfangreiche bzw. relativ komfortable Sensordaten bzgl. einer Fahrzeugfunktion (z.B. einer Funktion zur Öffnung einer Fahrzeugtür oder einer Fahrzeugklappe) bereitzustellen. Der Basissensor ist typischerweise eingerichtet, eine Vielzahl von diskreten Zuständen anzunehmen, und damit eingeschränkte Basisinformationen bzgl. der Fahrzeugfunktion bereitzustellen (z.B. um die Fahrzeugfunktion mit einem reduzierten Komfort bereitstellen zu können). Ggf. kann der Basissensor auch im Betriebsmodus aktiv sein, und einen Teil der Sensordaten bereitstellen.

Das Steuergerät ist weiter eingerichtet, Informationen von dem Fahrzeugmodul über eine Datenleitung (insbesondere über eine Ein-Draht Datenleitung) zu empfangen. Außerdem ist das Steuergerät eingerichtet, die empfangenen Informationen in Abhängigkeit davon zu interpretieren, ob sich das Fahrzeugmodul in dem Betriebsmodus oder in dem Energiesparmodus befindet. Insbesondere kann das Steuergerät eingerichtet sein, in Abhängigkeit davon, ob sich das Fahrzeugmodul in dem Betriebsmodus oder in dem Energiesparmodus befindet, die empfangenen Informationen dem ersten Sensor oder dem Basissensor zuzuordnen. Insbesondere können die Informationen auf der Datenleitung dem ersten Sensor zugeordnet werden (und gemäß einem Übertragungsverfahren mit dem ersten Sensor interpretiert werden), wenn sich das Fahrzeugmodul im Betriebsmodus befindet. Andererseits können die Informationen auf der Datenleitung dem Basissensor zugeordnet werden (und gemäß der vordefinierten Informationen bzgl. der diskreten Zustände interpretiert werden), wenn sich das Fahrzeugmodul im Energiesparmodus befindet. So kann in effizienter Weise eine gemeinsame Datenleitung für die Bereitstellung einer Basisfunktion im Energiesparmodus genutzt werden. Mit anderen Worten, so kann in effizienter Weise eine Basisfunktion bereitgestellt werden.

Gemäß einem weiteren Aspekt wird ein Fahrzeug (z.B. ein Personenkraftwagen, ein Lastkraftwagen oder ein Motorrad) beschrieben, welches das in diesem Dokument beschriebene Fahrzeugmodul und/oder das in diesem Dokument beschriebene Steuergerät umfasst.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigt
Figur 1 ein Blockdiagramm eines beispielhaften Fahrzeugmoduls mit einem Basissensor zur Bereitstellung einer Basisfunktion;
Figur 2a ein Blockdiagramm eines beispielhaften Fahrzeugmoduls, welches in effizienter Weise mit einem zentralen Steuergerät verbunden ist; und
Figur 2b weitere Details des in Fig. 2a dargestellten Fahrzeugmoduls.

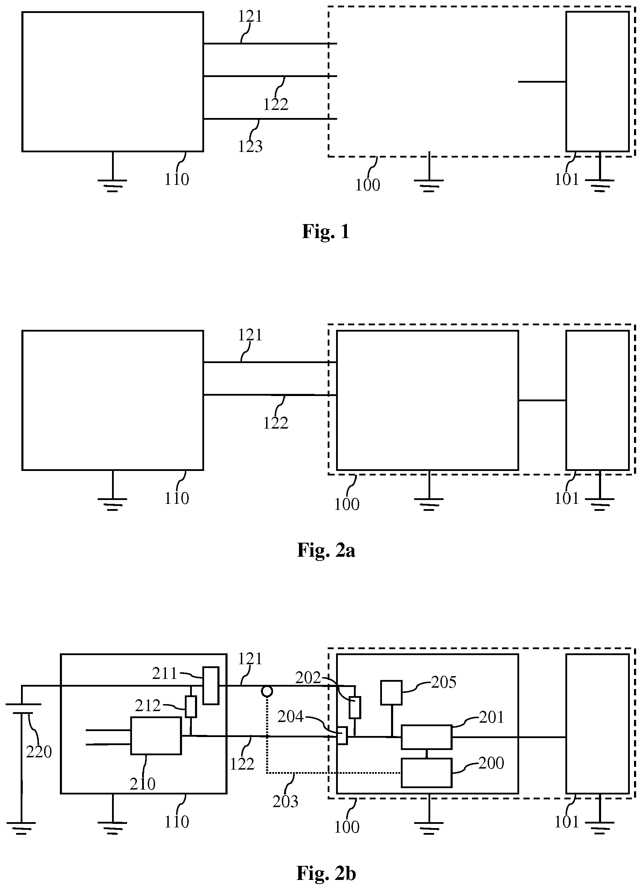

Wie eingangs dargelegt, befasst sich das vorliegende Dokument mit der effizienten Bereitstellung von ein oder mehreren Basisfunktionen eines Fahrzeugmoduls im Fehlerfall und/oder zur Realisierung eines reduzierten Energieverbrauchs. In diesem Zusammenhang zeigt Fig. 1 ein Fahrzeugmodul 100, welches über eine Versorgungsleitung 121 mit einen Steuergerät 110 des Fahrzeugs (z.B. mit einem zentralen Steuergerät) verbunden ist. Das Steuergerät 110 kann über die Versorgungsleitung 121 elektrische Energie zum Betrieb des Fahrzeugmoduls 100 bereitstellen. Des Weiteren ist das Fahrzeugmodul 100 über eine Datenleitung 122 mit dem Steuergerät 110 verbunden. Das Fahrzeugmodul 100 und das Steuergerät 110 können über die Datenleitung 122 Daten austauschen, wie z.B. Steuerdaten von dem Steuergerät 110 an das Fahrzeugmodul 100 zur Steuerung des Fahrzeugmoduls 100 und/oder Sensordaten von dem Fahrzeugmodul 100 zu dem Steuergerät 110. Das Fahrzeugmodul 100 umfasst beispielsweise einen Türsensor, der eingerichtet ist, eine Annäherung einer Hand eines Nutzers des Fahrzeugs zu detektieren. Die Sensordaten des Türsensors können über die Datenleitung 122 an das Steuergerät 110 übermittelt werden.

Das Fahrzeugmodul 100 umfasst weiter einen Basissensor 101, der eingerichtet ist, auch im Fehlerfall bzw. auch in einem Energiesparmodus Daten für ein oder mehreren Basisfunktionen bereitzustellen. Ein Fehlerfall liegt insbesondere vor, wenn das Fahrzeugmodul 100 nicht mehr über die Versorgungsleitung 121 mit elektrischer Energie versorgt wird. Aus diesem Grund kann der Fehlerfall auch als ein Fall mit reduziertem Energieverbrauch betrachtet werden. Mit anderen Worten, das Fahrzeugmodul 100 kann in einem Energiesparmodus betrieben werden, bei dem das Fahrzeugmodul 100 keine oder nur eine reduzierte Menge an elektrischer Energie bereitgestellt wird. Der Basissensor 101 kann somit eingerichtet sein, Daten für die ein oder mehreren Basisfunktionen ohne elektrische Energie aus einer Energieversorgung des Fahrzeugs (z.B. aus einer Fahrzeugbatterie) bereitzustellen.

Beispielsweise kann der Basissensor 101 einen Schalter (in diesem Dokument auch als Basis-Schalter bezeichnet) umfassen, der durch einen Nutzer des Fahrzeugs betätigt werden kann. Der Basis-Schalter kann z.B. eingerichtet sein, eine Basissensorleitung 123 mit Masse zu verbinden. Die Betätigung des Basis-Schalters kann so über die Basissensorleitung 123 (welche auch als Hardware-Leitung bezeichnet werden kann) in dem Steuergerät 110 detektiert werden, auch wenn das Fahrzeugmodul 100 nicht mit elektrischer Energie versorgt wird. Der Basis-Schalter des Basissensors 101 kann z.B. an einem Türgriff des Fahrzeugs angeordnet sein. Somit kann die Betätigung des Türgriffs durch einen Nutzer des Fahrzeugs auch ohne Betrieb des Türsensors des Fahrzeugmoduls 100 detektiert werden.

Die Bereitstellung von Daten für eine Basisfunktion gemäß Fig. 1 erfordert eine Basissensorleitung 123. Dies führt zu einem höheren Kabelaufkommen im Fahrzeug und somit zu erhöhten Kosten und Gewicht. Desweiteren erfordert eine zusätzliche Basissensorleitung 123 zusätzliche Pins an den Steckverbindern und/oder den Prozessoren des Steuergeräts 110 und des Fahrzeugmoduls 100.

Fig. 2a zeigt eine alternative Anordnung zur Bereitstellung von Daten für ein oder mehrere Basisfunktionen durch einen Basissensor 101. In der in Fig. 2a dargestellten Anordnung wird die Funktion von einer Basissensorleitung 123 in die Datenleitung 122 integriert. Insbesondere wird die Datenleitung 122 im Energiesparmodus, z.B. bei Unterbrechung der Energieversorgung über die Versorgungsleitung 121, für die Übertragung von Informationen des Basissensors 101 verwendet. So können die Daten für die Basisfunktion ohne zusätzlichen Aufwand für die Verkabelung des Fahrzeugmoduls 100 bereitgestellt werden.

Fig. 2b zeigt eine beispielhafte Implementierung der in Fig. 2a dargestellten Anordnung eines Fahrzeugmoduls 100 mit einem Basissensor 101. Das Fahrzeugmodul 100 umfasst einen ersten Sensor 205 (z.B. den Annäherungssensor eines Türgriffs), der eingerichtet ist, Sensordaten für die Bereitstellung einer Fahrzeugfunktion zu erfassen und über die Datenleitung 122 bereitzustellen. Die Sensordaten können bereitgestellt werden, wenn sich das Fahrzeugmodul 100 im Betriebsmodus befindet (z.B. wenn das Fahrzeugmodul 100 über die Versorgungsleitung 121 mit elektrischer Energie versorgt wird). Zum Anschluss der Datenleitung 122 kann das Fahrzeugmodul 100 eine Schnittstelle 204 umfassen.

Der Basissensor 101 kann dazu verwendet werden, Daten für eine Basisfunktion der Fahrzeugfunktion bereitzustellen, wenn sich das Fahrzeugmodul 100 in einem Energiesparmodus befindet (z.B. wenn das Fahrzeugmodul 100 nicht über die Versorgungsleitung 121 mit elektrischer Energie versorgt wird).

Der Basissensor 101 kann über einen Energiesparmodus-Schalter 201 mit der Datenleitung 122 verbunden werden, um die Daten für eine Basisfunktion bereitzustellen. Eine Steuereinheit 200 des Fahrzeugmoduls 100 kann eingerichtet sein, über eine Leitung 203 zu erkennen, wenn sich das Fahrzeugmodul 100 in dem Betriebsmodus befindet. Insbesondere kann erkannt werden, dass eine Energieversorgung über die Versorgungsleitung 121 erfolgt. In diesem Fall kann die Steuereinheit 200 des Fahrzeugmoduls 100 den Energiesparmodus-Schalter 201 ansteuern, um den Basissensor 101 von der Datenleitung 122 zu trennen. Andererseits kann der Energiesparmodus-Schalter 201 derart ausgelegt sein, dass im Energiesparmodus, wenn die Energieversorgung über die Versorgungsleitung 121 unterbrochen wurde, der Energiesparmodus-Schalter 201 den Basissensor 101 nicht mehr von der Datenleitung 122 trennt.

Beispielsweise kann der Energiesparmodus-Schalter 201 einen Transistor umfassen. Der Transistor kann selbstleitend sein. Insbesondere kann der Transistor eingerichtet sein, bei Unterbrechung der Versorgungsleitung 121 automatisch in den leitenden Zustand überzugehen, um den Basissensor 101 mit der Datenleitung 122 zu verbinden.

Das Steuergerät 110 kann eine Kommunikationseinheit 210 umfassen. Die Kommunikationseinheit 210 kann eingerichtet sein, im Normalfall (d.h. im Betriebsmodus) über die Datenleitung 122 Daten mit dem Fahrzeugmodul 100 (insbesondere mit dem ersten Sensor 205) auszutauschen (z.B. Steuerdaten und/oder Sensordaten). Des Weiteren kann die Kommunikationseinheit 210 eingerichtet sein, im Energiesparmodus ein Spannungsniveau bzw. einen Pegel auf der Datenleitung 122 zu ermitteln, um einen Zustand des Basissensors 101 zu ermitteln, und um so Daten für eine Basisfunktion der Fahrzeugfunktion bereitzustellen.

Des Weiteren zeigt Fig. 2b eine beispielhafte Energieversorgung 220 (z.B. eine Fahrzeugbatterie) und einen Schalter 211 in dem Steuergerät 110, wobei der Schalter 211 geöffnet werden kann, wenn erkannt wird, dass die verfügbare Energie der Energieversorgung 220 einen vordefinierten Schwellenwert erreicht oder unterschreitet. Insbesondere kann der Schalter 211 dazu verwendet werden, das Fahrzeugmodul 100 "wegzuschalten", wenn erkannt wird, dass eine Fahrzeugbatterie 220 einen vordefinierten Ladungszustand erreicht oder unterschreitet. So kann der Energieverbrauch des Fahrzeugs (insbesondere bei einem niedrigen Ladungszustand der Fahrzeugbatterie) reduziert werden. Alternativ oder ergänzend kann der Schalter 211 dazu verwendet werden, das Fahrzeugmodul 100 "wegzuschalten", wenn erkannt wird, dass eine Energiesparfunktion des Fahrzeugs aktiviert wurde (z.B. durch einen Nutzer des Fahrzeugs). So kann der Energieverbrauch des Fahrzeugs (insbesondere der Ruhestrom eines geparkten Fahrzeugs) bei Bedarf reduziert werden.

Des Weiteren zeigt Fig. 2b beispielhafte Pull-Up Widerstände 202, 212, die dazu verwendet werden können, die Datenleitung 122 auf ein vordefiniertes Spannungsniveau (z.B. auf das Spannungsniveau des Energieversorgung 220) zu heben.

Wie oben dargelegt kann für die Realisierung des Fehlermodus-Schalters 201 in dem Fahrzeugmodul 100 ein selbstleitender Transistor verwendet werden. Wenn kein Fehler bzw. keine Veranlassung für einen reduzierten Energieverbrauch vorliegt (d.h. im Betriebsmodus) kann das Gate des Transistors durch die Steuereinheit 200 des Fahrzeugmoduls 100 angesteuert werden, so dass der Transistor gesperrt bleibt. Die Versorgungsleitung (bzw. die Fehlerleitung) 121 kann in diesem Fall auf einem vordefinierten Spannungsniveau der Versorgungsspannung liegen (z.B. bei 12V). Die Datenleitung 122 kann für den Datenaustausch zwischen Steuergerät 110 und Fahrzeugmodul 100 (insbesondere dem ersten Sensor 205) verwendet werden.

Im Fehlerfall bzw. im Energiesparmodus fällt die Spannung auf der flankengesteuerten Versorgungsleitung 121 ab. In diesem Fall wird der Transistor des Fehlermodus-Schalters 201 leitend. Das Potential des oberen Kontakts (z.B. der Source) des Transistors wird dabei auf das Potential der Datenleitung (z.B. 12V) gezogen. Bei einer Änderung des Zustands des Basissensors 101 (z.B. bei Schließen des Basis-Schalters) kann das Potential der Datenleitung 122 auf Masse gezogen werden. Diese Potentialänderung kann durch die Kommunikationseinheit 210 im zentralen Steuergerät 110 (z.B. über einen Mikrocontroller des Steuergeräts 110) erkannt werden. Insbesondere kann erkannt werden, dass der Energiesparmodus vorliegt (z.B. dass der Spannungspegel auf der Versorgungsleitung 121 auf 0V liegt) und dass eine Potentialänderung auf der Datenleitung 122 erfolgt. Die Potentialänderung auf der Datenleitung 122 kann so einer Zustandsänderung des Basissensors 101 zugeordnet werden. Somit können die Daten für die Bereitstellung der Basisfunktion der Fahrzeugfunktion über die Datenleitung 122 bereitgestellt werden.

Das Fahrzeugmodul 100 kann unterschiedliche Typen von Sensoren, Tastern und/oder Schaltern umfassen, die auch bei einem ausgeschalteten Datenbus (d.h. in einem Fehlerfall) noch Daten für eine Basisfunktion bereitstellen müssen. Beispiele sind ein Mechanismus zum Öffnen einer Fahrzeugtür, einer Heckklappe, einer Tankklappe etc.

Die in den Fig. 2a und 2b dargestellte Anordnung ermöglicht es, Daten für eine Basisfunktion einer Fahrzeugfunktion ohne zusätzliche Verkabelung bereitzustellen. Insbesondere können Fahrzeugmodule mit Basissensoren bereitgestellt werden, und dennoch die Kosten und das Gewicht gering gehalten werden.

Des Weiteren können es derartige Fahrzeugmodule 100 mit Basissensoren 101 einem Nutzer eines Fahrzeugs ermöglichen, den Energieverbrauch eines Fahrzeugs bei Bedarf zu reduzieren. Beispielsweise kann es dem Nutzer eines Fahrzeugs ermöglicht werden, eine Energiesparfunktion des Fahrzeugs zu aktivieren, durch die ein oder mehrere Fahrzeugmodule 100 mit Basissensoren 101 in den Energiesparmodus versetzt werden. Die Energiesparfunktion kann z.B. aktiviert werden, wenn das Fahrzeug für einen längeren Zeitraum (z.B. während eines Urlaubs) geparkt wird. Durch die Aktivierung der Energiesparfunktion kann der Ruhestrom des Fahrzeugs reduziert und so das Risiko einer entladenen Fahrzeugbatterie reduziert werden. Andererseits kann durch die Basissensoren 101 weiterhin eine Basisfunktion bereitgestellt werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Fahrzeugmodul (100) für ein Fahrzeug, welches umfasst,
- ein oder mehrere Sensoren (101, 205), die eingerichtet sind, in einem Betriebsmodus des Fahrzeugmoduls (100) Sensordaten zu erfassen;
- eine Schnittstelle (204) für eine Datenleitung (122) zur Übertragung der Sensordaten an ein Steuergerät (110) des Fahrzeugs;
**dadurch gekennzeichnet, dass** die Sensoren eingerichtet sind, in einem Energiesparmodus eine Vielzahl von diskreten Zuständen anzunehmen, um in dem Energiesparmodus des Fahrzeugmoduls (100) eine Basisfunktion des Fahrzeugmoduls (100) bereitzustellen; wobei das Fahrzeugmodul weiterhin umfasst,
- einen Energiesparmodus-Schalter (201), der eingerichtet ist, in dem Energiesparmodus die ein oder mehrere Sensoren (101, 205) derart mit der Schnittstelle (204) für die Datenleitung (122) zu verbinden, dass Informationen bzgl. eines Zustands der Vielzahl von diskreten Zuständen über die Datenleitung (122) an das Steuergerät (110) übermittelt werden können.

2. Fahrzeugmodul (100) gemäß Anspruch 1, wobei
- die ein oder mehreren Sensoren (101, 205) einen ersten Sensor (205) umfassen, der eingerichtet ist, in dem Betriebsmodus des Fahrzeugmoduls (100) die Sensordaten zu erfassen;
- die ein oder mehreren Sensoren (101, 205) einen Basissensor (101) umfassen, der eingerichtet ist, die Vielzahl von diskreten Zuständen anzunehmen, um in dem Energiesparmodus des Fahrzeugmoduls (100) die Basisfunktion des Fahrzeugmoduls (100) bereitzustellen; und
- der Energiesparmodus-Schalter (201) eingerichtet ist, in dem Energiesparmodus den Basissensor (101) mit der Schnittstelle (204) für die Datenleitung (122) zu verbinden, um die Informationen bzgl. des Zustands des Basissensors (101) über die Datenleitung (122) an das Steuergerät (110) zu übermitteln.

3. Fahrzeugmodul (100) gemäß Anspruch 2, wobei
- der Basissensor (101) einen Basis-Schalter umfasst, der durch einen Nutzer des Fahrzeugs betätigt werden kann;
- der Basis-Schalter einen offenen Zustand und einen geschlossenen Zustand umfasst;
- die Informationen bzgl. des offenen Zustands ein Spannungsniveau der Datenleitung (122) umfassen, welches größer als oder gleich wie ein Spannungs-Schwellenwert ist; und
- die Informationen bzgl. des geschlossenen Zustands ein Spannungsniveau der Datenleitung (122) umfassen, welches kleiner als der Spannungs-Schwellenwert ist.

4. Fahrzeugmodul (100) gemäß Anspruch 3, wobei der Basis-Schalter eingerichtet ist, im geschlossenen Zustand die Schnittstelle (204) für die Datenleitung (122) mit einer Masse des Fahrzeugs zu koppeln.

5. Fahrzeugmodul (100) gemäß einem der vorhergehenden Ansprüche, wobei
- der Energiesparmodus-Schalter (201) einen Transistor umfasst, der einen leitenden Zustand und einen sperrenden Zustand umfasst; und
- der Transistor eingerichtet ist, bei Übergang des Fahrzeugmoduls (100) von dem Betriebsmodus in den Energiesparmodus von dem sperrenden Zustand in den leitenden Zustand überzugehen.

6. Fahrzeugmodul (100) gemäß Anspruch 5, weiter umfassend, eine Steuereinheit (200), die eingerichtet ist, den Transistor im sperrenden Zustand zu halten, wenn das Fahrzeugmodul (100) im Betriebsmodus ist.

7. Fahrzeugmodul (100) gemäß einem der vorhergehenden Ansprüche, wobei
- das Fahrzeugmodul (100) eine Schnittstelle für eine Versorgungsleitung (121) umfasst; und
- das Fahrzeugmodul (100) in dem Energiesparmodus ist, wenn eine Versorgungsspannung an der Schnittstelle für die Versorgungsleitung (121) kleiner als oder gleich wie ein Versorgungs-Schwellenwert ist.

8. Fahrzeugmodul (100) gemäß Anspruch 7 mit Rückbezug auf Anspruch 2, wobei der Energiesparmodus-Schalter (201) eingerichtet ist, automatisch den Basissensor (101) mit der Schnittstelle (204) für die Datenleitung (122) zu verbinden, wenn die Versorgungsspannung an der Schnittstelle für die Versorgungsleitung (121) auf oder unter den Versorgungs-Schwellenwert fällt.

9. Fahrzeugmodul (100) gemäß einem der Ansprüche 7 bis 8, wobei das Fahrzeugmodul (100) eingerichtet ist, im Energiesparmodus elektrische Energie für die Versorgung der ein oder mehreren Sensoren (101, 205) über die Schnittstelle (204) für die Datenleitung (122) zu beziehen.

10. Fahrzeugmodul (100) gemäß einem der vorhergehenden Ansprüche, wobei
- die ein oder mehreren Sensoren (101, 205) eine Vielzahl von Sensoren umfassen;
- in dem Betriebsmodus alle Sensoren der Vielzahl von Sensoren aktiv sind; und
- in dem Energiesparmodus nur eine Teilmenge der Vielzahl von Sensoren aktiv ist.

11. Fahrzeugmodul (100) gemäß einem der vorhergehenden Ansprüche, wobei der erste Sensor (205) einen Sensor an einem Türgriff des Fahrzeugs, an einer Tür des Fahrzeugs, an einer Heckklappe des Fahrzeugs und/oder an einer Trankklappe des Fahrzeugs umfasst.

12. Fahrzeugmodul (100) gemäß einem der vorhergehenden Ansprüche, wobei die Datenleitung (122) eine Ein-Draht Datenleitung, insbesondere ein Local Interconnect Network Bus, ist.

13. Datenübertragungssystem für ein Fahrzeug, umfassend ein Fahrzeugmodul (100) gemäß einem der vorhergehenden Ansprüche und ein Steuergerät (110), wobei das Steuergerät (110) eingerichtet ist,
- zu ermitteln, ob sich das Fahrzeugmodul (100) in einem Betriebsmodus oder in einem Energiesparmodus befindet; wobei das Fahrzeugmodul (100) ein oder mehrere Sensoren (101, 205) umfasst, die eingerichtet sind, in dem Betriebsmodus, Sensordaten über eine Datenleitung (122) zu übertragen, und in dem Energiesparmodus, diskrete Zustandsinformationen über die Datenleitung (122) zu übertragen;
- Informationen von dem Fahrzeugmodul (100) über die Datenleitung (122) zu empfangen; und
- die empfangenen Informationen in Abhängigkeit davon zu interpretieren, ob sich das Fahrzeugmodul (100) in dem Betriebsmodus oder in dem Energiesparmodus befindet.

## Claims

1. Vehicle module (100) for a vehicle, which module comprises
- one or more sensors (101, 205) which are designed to record sensor data in an operating mode of the vehicle module (100);
- an interface (204) for a data line (122) for transmitting the sensor data to a control device (110) of the vehicle;
**characterized in that** the sensors are designed to assume a large number of discrete states in an energy saving mode in order to provide a basic function of the vehicle module (100) in the energy saving mode of the vehicle module (100); wherein the vehicle module further comprises
- an energy saving mode switch (201) which is designed to connect the one or more sensors (101, 205) to the interface (204) for the data line (122) in the energy saving mode in such a way that information relating to a state of the large number of discrete states can be transmitted to the control device (110) by means of the data line (122) .

2. Vehicle module (100) according to Claim 1, wherein
- the one or more sensors (101, 205) comprise a first sensor (205) which is designed to record the sensor data in the operating mode of the vehicle module (100);
- the one or more sensors (101, 205) comprise a basic sensor (101) which is designed to assume the large number of discrete states in order to provide the basic function of the vehicle module (100) in the energy saving mode of the vehicle module (100); and
- the energy saving mode switch (201) is designed to connect the basic sensor (101) to the interface (204) for the data line (122) in the energy saving mode in order to transmit the information relating to the state of the basic sensor (101) to the control device (110) by means of the data line (122) .

3. Vehicle module (100) according to Claim 2, wherein
- the basic sensor (101) comprises a basic switch which can be operated by a user of the vehicle;
- the basic switch comprises an open state and a closed state;
- the information relating to the open state comprises a voltage level of the data line (122), which voltage level is greater than or equal to a voltage threshold value; and
- the information relating to the closed state comprises a voltage level of the data line (122), which voltage level is less than the voltage threshold value.

4. Vehicle module (100) according to Claim 3, wherein the basic switch is designed to couple the interface (204) for the data line (122) to a ground connection of the vehicle in the closed state.

5. Vehicle module (100) according to one of the preceding claims, wherein
- the energy saving mode switch (201) comprises a transistor which comprises an on state and an off state; and
- the transistor is designed to move from the off state to the on state when the vehicle module (100) moves from the operating mode to the energy saving mode.

6. Vehicle module (100) according to Claim 5, further comprising a control unit (200) which is designed to keep the transistor in the off state when the vehicle module (100) is in the operating mode.

7. Vehicle module (100) according to one of the preceding claims, wherein
- the vehicle module (100) comprises an interface for a supply line (121); and
- the vehicle module (100) is in the energy saving mode when a supply voltage at the interface for the supply line (121) is less than or equal to a supply threshold value.

8. Vehicle module (100) according to Claim 7 with reference back to Claim 2, wherein the energy saving mode switch (201) is designed to automatically connect the basic sensor (101) to the interface (204) for the data line (122) when the supply voltage at the interface for the supply line (121) falls to or below the supply threshold value.

9. Vehicle module (100) according to either of Claims 7 and 8, wherein the vehicle module (100) is designed to draw electrical energy for supplying the one or more sensors (101, 205) by means of the interface (204) for the data line (122) in the energy saving mode.

10. Vehicle module (100) according to one of the preceding claims, wherein
- the one or more sensors (101, 205) comprise a large number of sensors;
- all of the sensors of the large number of sensors are active in the operating mode; and
- only some of the large number of sensors are active in the energy saving mode.

11. Vehicle module (100) according to one of the preceding claims, wherein the first sensor (205) comprises a sensor on a door handle of the vehicle, on a door of the vehicle, on a tailgate of the vehicle and/or on a fuel filler flap of the vehicle.

12. Vehicle module (100) according to one of the preceding claims, wherein the data line (122) is a single-wire data line, in particular a local interconnect network bus.

13. Data transmission system for a vehicle, comprising a vehicle module (100) according to one of the preceding claims and a control device (110), wherein the control device (110) is designed
- to ascertain whether the vehicle module (100) is in an operating mode or in an energy saving mode; wherein the vehicle module (100) comprises one or more sensors (101, 205) which are designed to transmit sensor data by means of a data line (122) in the operating mode, and to transmit discrete state information by means of the data line (122) in the energy saving mode;
- to receive information from the vehicle module (100) by means of the data line (122); and
- to interpret the received information depending on whether the vehicle module (100) is in the operating mode or in the energy saving mode.

## Revendications

1. Module de véhicule (100) destiné à un véhicule, comprenant
- un ou plusieurs capteurs (101, 205) qui sont aménagés, dans un mode opérationnel du module de véhicule (100), pour détecter des données de capteur ;
- une interface (204) destinée à une ligne de données (122) pour la transmission des données de capteur à un contrôleur (110) du véhicule ;
**caractérisé en ce que** les capteurs sont aménagés pour adopter, dans un mode d'économie d'énergie, une pluralité d'états discrets afin d'assurer une fonction de base du module de véhicule (100) dans le mode d'économie d'énergie du module de véhicule (100) ; le module de véhicule comprenant en outre
- un commutateur de mode d'économie d'énergie (201) qui est aménagé pour relier, dans le mode d'économie d'énergie, les un ou plusieurs capteurs (101, 205) à l'interface (204) pour la ligne de données (122) de telle sorte que des informations concernant un état de la pluralité d'états discrets peuvent être transmises au contrôleur (110) par la ligne de données (122) .

2. Module de véhicule (100) selon la revendication 1, dans lequel
- les un ou plusieurs capteurs (101, 205) comprennent un premier capteur (205) qui est aménagé pour détecter les données de capteur dans le mode opérationnel du module de véhicule (100) ;
- les un ou plusieurs capteurs (101, 205) comprennent un capteur de base (101) qui est aménagé pour adopter la pluralité d'états discrets afin d'assurer la fonction de base du module de véhicule (100) dans le mode d'économie d'énergie du module de véhicule (100) ; et
- le commutateur de mode d'économie d'énergie (201) est aménagé pour relier, dans le mode d'économie d'énergie, le capteur de base (101) à l'interface (204) destinée à la ligne de données (122) afin de transmettre les informations concernant l'état du capteur de base (101) au contrôleur (110) par la ligne de données (122).

3. Module de véhicule (100) selon la revendication 2, dans lequel
- le capteur de base (101) comprend un commutateur de base qui peut être actionné par un utilisateur du véhicule ;
- le commutateur de base comprend un état ouvert et un état fermé ;
- les informations concernant l'état ouvert comprennent un niveau de tension de la ligne de données (122) qui est supérieur ou égal à une valeur seuil de tension ; et
- les informations concernant l'état fermé comprennent un niveau de tension de la ligne de données (122) qui est inférieur à la valeur seuil de tension.

4. Module de véhicule (100) selon la revendication 3, dans lequel le commutateur de base est aménagé pour coupler à l'état fermé l'interface (204) destinée à la ligne de données (122) à une masse du véhicule.

5. Module de véhicule (100) selon l'une quelconque des revendications précédentes, dans lequel
- le commutateur de mode d'économie d'énergie (201) comprend un transistor qui comprend un état passant et un état non passant ; et
- le transistor est aménagé pour passer de l'état non passant à l'état passant lorsque le module de véhicule (100) passe du mode opérationnel au mode d'économie d'énergie.

6. Module de véhicule (100) selon la revendication 5, comprenant en outre une unité de commande (200) qui est aménagée pour maintenir le transistor à l'état non passant lorsque le module de véhicule (100) se trouve à l'état opérationnel.

7. Module de véhicule (100) selon l'une quelconque des revendications précédentes, dans lequel
- le module de véhicule (100) comprend une interface destinée à une ligne d'alimentation (121) ; et
- le module de véhicule (100) se trouve dans le mode d'économie d'énergie lorsqu'une tension d'alimentation au niveau de l'interface destinée à la ligne d'alimentation (121) est inférieure ou égale à une valeur seuil d'alimentation.

8. Module de véhicule (100) selon la revendication 7 en référence à la revendication 2, dans lequel le commutateur de mode d'économie d'énergie (201) est aménagé pour relier le capteur de base (101) automatiquement à l'interface (204) destinée à la ligne de données (122) lorsque la tension d'alimentation à l'interface destinée à la ligne d'alimentation (121) descend jusqu'à ou au-dessous de la valeur seuil d'alimentation.

9. Module de véhicule (100) selon l'une quelconque des revendications 7 à 8, dans lequel le module de véhicule (100) est aménagé pour recevoir, dans le mode d'économie d'énergie, de l'énergie électrique pour l'alimentation des un ou plusieurs capteurs (101, 205) par l'intermédiaire de l'interface (204) destinée à la ligne de données (122).

10. Module de véhicule (100) selon l'une quelconque des revendications précédentes, dans lequel
- les un ou plusieurs capteurs (101, 205) comprennent une pluralité de capteurs ;
- dans le mode opérationnel, tous les capteurs de la pluralité de capteurs sont actifs ; et
- dans le mode d'économie d'énergie, seul un sous-ensemble de la pluralité de capteurs est actif.

11. Module de véhicule (100) selon l'une quelconque des revendications précédentes, dans lequel le premier capteur (205) comprend un capteur sur une poignée du véhicule, une portière du véhicule, un hayon du véhicule et/ou une trappe de réservoir du véhicule.

12. Module de véhicule (100) selon l'une quelconque des revendications précédentes, dans lequel la ligne de données (122) est une ligne de données à fil unique, en particulier un bus de réseau d'interconnexion local.

13. Système de transmission de données destiné à un véhicule, comprenant un module de véhicule (100) selon l'une quelconque des revendications précédentes et un contrôleur (110), le contrôleur (110) étant aménagé pour
- déterminer si le module de véhicule (100) se trouve dans un mode opérationnel ou un mode d'économie d'énergie ; le module de véhicule (100) comprenant un ou plusieurs capteurs (101, 205) qui sont aménagés pour transmettre, dans le mode opérationnel, des données de capteur par une ligne de données (122), et pour transmettre, dans le mode d'économie d'énergie, des informations d'état discrets par la ligne de données (122) ;
- recevoir des informations du module de véhicule (100) par la ligne de données (122) ; et
- interpréter les informations reçues en fonction du fait que le module de véhicule (100) se trouve dans le mode opérationnel ou dans le mode d'économie d'énergie.
